# EUROPEAN PATENT SPECIFICATION

(11) **EP 4 736 279 B1**
(45) Date of publication and mention of the grant of the patent: **10.06.2026**
(21) Application number: 24749275.4
(22) Date of filing: 30.07.2024
(51) Int. Cl.: H01R 13/66, H02B 11/04, H01R 13/11

(54) **SENSING DEVICE FOR TULIP CONTACT AND CIRCUIT BREAKER TROLLEY**
SENSORVORRICHTUNG FÜR TULPENKONTAKT UND SCHUTZSCHALTERWAGEN
DISPOSITIF DE DÉTECTION POUR CONTACT TULIPE ET CHARIOT DE DISJONCTEUR

(30) Priority: 31.07.2023 CN 202310954960
(43) Date of publication of application: 06.05.2026
(73) Proprietor: Siemens Aktiengesellschaft, 80333 München (DE)
(72) Inventor: XU, Cheng, Shanghai 200245 (CN); WANG, Jun Feng, Shanghai 200245 (CN)
(74) Representative: HKW Intellectual Property PartG mbB
(86) International application number: PCT/EP2024/071510
(87) International publication number: WO 2025/027000

(56) References cited:
- CN-U- 209 342 264
- CN-U- 218 895 858

## Description

### TECHNICAL FIELD

The present invention relates to the field of medium-voltage switch cabinets, in particular to a sensing device or a tulip contact, a circuit breaker trolley and a switch cabinet.

### BACKGROUND ART

A circuit breaker trolley is a very important device in a switch cabinet. The circuit breaker trolley has a tulip contact, which contacts and separates from a static contact as the circuit breaker trolley moves. In the course of long-term operation of the tulip contact, continuous passage of large currents will cause severe heating, which causes insulation to break down and may even have a serious impact on the device as a whole. It is thus necessary to monitor the temperature of the tulip contact in real time.

In the prior art, a wireless temperature sensor relying on electromagnetic induction is generally used to monitor the temperature of the tulip contact in real time. Specifically, the wireless temperature sensor is fixed to an electrically conductive belt-shaped body; during use, the electrically conductive belt-shaped body is formed into an annular structure, thus forming an electrically conductive ring, and the diameter of the electrically conductive ring is adjusted by means of a snap-fit connector on the electrically conductive ring, so as to fit the electrically conductive ring against an outer surface of the tulip contact, and thus fix the wireless temperature sensor to the outer periphery of the tulip contact. The electrically conductive ring can draw power from a primary loop by the principle of electromagnetic induction, and the wireless temperature sensor can use current size to monitor the temperature of the tulip contact in real time. In addition, when in an operational state, the tulip contact is in a radially outward expanded state, and an annular spring at an outer ring of the tulip contact provides a centripetal force, so as to provide contact pressure between the tulip contact and the static contact. At this time, the electrically conductive ring will also be subjected to a radial force as the tulip contact expands. Since the diameter of the electrically conductive ring is fixed at this time, occlusion between the tulip contact and the static contact will very likely be affected, and an excessively large radial force might cause disengagement of the snap-fit connector.

CN 209 342 264 U discloses a sensing device with a tulip contact with a spring. CN 218 895 858 U discloses a contact temperature measurement protection mechanism for electrical equipment installation with a tulip contact.

### SUMMARY OF THE INVENTION

In view of the above, the present invention proposes a sensing device for a tulip contact, the tulip contact comprising a support assembly, multiple contact fingers and an elastic assembly, the support assembly being used to support the multiple contact fingers, the multiple contact fingers being arranged circumferentially and distributed around an axis, the elastic assembly being fitted round an outer periphery of the multiple contact fingers, a gap being present between two adjacent contact fingers, and the tulip contact being configured to contact a static contact; the sensing device comprising:
an electrically conductive ring, formed by fastening an electrically conductive belt-shaped body, the electrically conductive ring being configured to be fitted round an outer periphery of the tulip contact;
a wireless sensor, arranged on the electrically conductive ring;
the electrically conductive ring has at least 1 deformable structure, the deformable structure being configured to extend into 1 said gap.

In the present invention, due to the presence of the deformable structure, the electrically conductive ring is able to adapt to radial expansion and contraction of the tulip contact, and it is thus possible to ensure the accuracy of measurement of the tulip contact by the wireless sensor.

Optionally, the deformable structure extends toward a circle center of the electrically conductive ring; or
the deformable structure extends in an axial direction of the electrically conductive ring.

Optionally, the deformable structure is configured to extend into 1 said gap. Thus, the deformable structure will not obstruct other existing structures.

According to the sensing device described above, optionally, the deformable structure is U-shaped. Such a shape is easy to form by processing.

According to the sensing device described above, optionally, the number of the deformable structures is 2, the 2 deformable structures being able to respectively extend into gaps at two sides of 1 contact finger; or
the number of the deformable structures is 2, the 2 deformable structures being able to respectively extend into gaps at one side of 2 contact fingers having the axis as an axis of symmetry.

When 2 deformable structures 61 are used, it is possible to adapt to radial expansion of the tulip contact to a greater degree, and a minimal amount of material can be used, so as to reduce costs.

According to the sensing device described above, optionally, 1 said gap is used to accommodate 1 said deformable structure. Thus, the deformable structure has sufficient room to deform.

According to the sensing device described above, optionally, the deformable structure gradually decreases in width in a direction toward the axis. Such a structure facilitates insertion of the deformable structure into the gap.

According to the sensing device described above, optionally, on the same circumference, an arc length of the deformable structure is less than or equal to 1/3 of an arc length of the gap. Thus, the deformable structure has sufficient room to deform within the gap.

According to the sensing device described above, optionally, a length of the deformable structure is 1/3 - 2/3 of the contact finger in a radial direction.

According to the sensing device described above, optionally, the deformable structure is able to experience deformation when the tulip contact is in contact with the static contact for circuit closure, and the deformable structure is able to return to its original position when the tulip contact is separated from the static contact.

The present invention further provides a circuit breaker trolley, comprising a sensing device for a tulip contact according to any one of the embodiments above, and the tulip contact.

According to the circuit breaker trolley described above, optionally, the elastic assembly comprises multiple ring springs, and the electrically conductive ring is located between 2 ring springs. It is thus possible to prevent the electrically conductive ring from falling off the tulip contact when the electrically conductive ring deforms.

The present invention further provides a switch cabinet, comprising a tulip contact and the sensing device for a tulip contact according to any one of the embodiments above.

### BRIEF DESCRIPTION OF THE DRAWINGS

Preferred embodiments of the present invention are described in detail below with reference to the drawings, to give those skilled in the art a clearer understanding of the abovementioned and other features and advantages of the present invention. In the drawings:
Fig. 1 is a structural schematic drawing of a sensing device for a tulip contact according to the present invention.
Fig. 2 is a structural schematic drawing of a sensing device according to the present invention, fitted to a tulip contact.
Fig. 3 is a sectional schematic drawing of a sensing device according to the present invention, fitted to a tulip contact.

Key to the drawings:
1 - support assembly
2 - contact finger
21 - gap
3 - annular spring
4 - contact arm
5 - static contact
6 - electrically conductive ring
61 - deformable structure
7 - wireless sensor
8 - silicone rubber pad
O - circle center

### DETAILED DESCRIPTION OF THE INVENTION

To clarify the objective, technical solution and advantages of the present invention, the present invention is explained in further detail below through embodiments. A noun or pronoun referring to a person in the present patent application is not limited to a specific gender.

The present invention provides a sensing device for a tulip contact, for solving the problems arising from expansion of the tulip contact in an operational state after an electrically conductive ring has been fitted round the tulip contact.

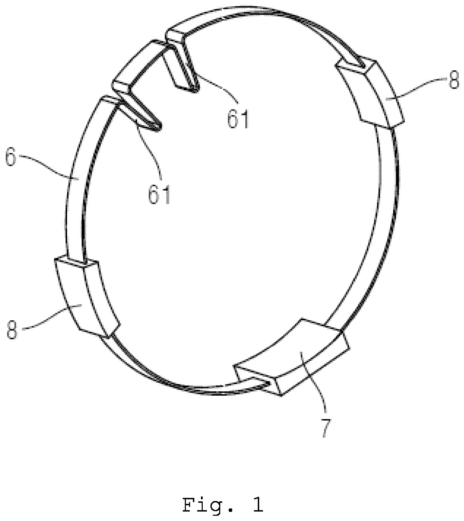

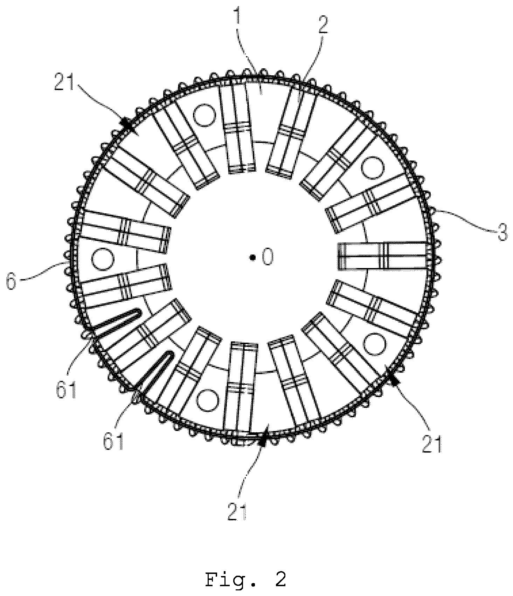

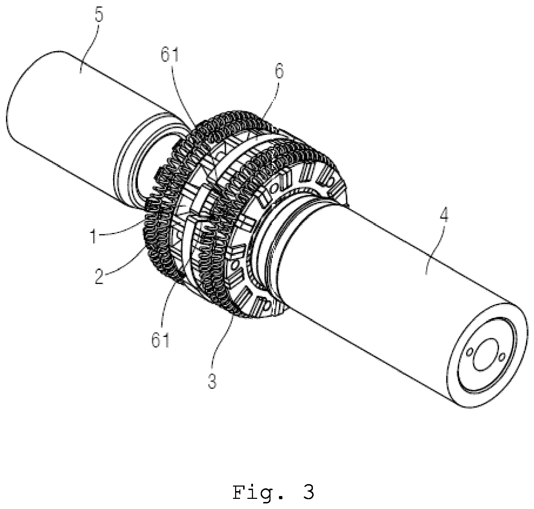

Fig. 1 shows a structural schematic drawing of a sensing device for a tulip contact according to the present invention. Fig. 2 shows a structural schematic drawing of a sensing device according to the present invention, fitted to a tulip contact. Fig. 3 shows a sectional schematic drawing of a sensing device according to the present invention, fitted to a tulip contact.

The tulip contact comprises a support assembly 1, multiple contact fingers 2 and an elastic assembly. The support assembly 1 is used to support the multiple contact fingers 2, the multiple contact fingers 2 are arranged circumferentially and distributed around an axis, the elastic assembly is fitted round an outer periphery of the multiple contact fingers 2, a gap 21 is present between two adjacent contact fingers 2, and the tulip contact is configured to contact a static contact 5. The support assembly 1 may be a grid plate, the contact fingers 2 being located at a radially outer side of the grid plate and distributed in the circumferential direction of the grid plate, i.e. the multiple contact fingers 2 being arranged circumferentially around an axis. As shown in Fig. 2, the circle center O is a position passed through by the axis. The elastic assembly may comprise multiple annular springs 3, the annular springs 3 being fitted round the outer periphery of the contact fingers 2. As shown in Fig. 3, the tulip contact is fixed to a contact arm 4; the structure of the tulip contact is prior art, so is not described again here. When the circuit breaker trolley is operational, the tulip contact occludes with the static contact 5; that is, the static contact 5 extends to the center of the tulip contact, and the tulip contact expands radially outward.

As shown in Figs. 1 - 3, the sensing device of the present invention comprises an electrically conductive ring 6 and a wireless sensor 7. The electrically conductive ring 6 is fitted round the outer periphery of the tulip contact. The wireless sensor 7 is arranged on the electrically conductive ring 6. The electrically conductive ring 6 is formed by fastening an electrically conductive belt-shaped body; the material of the electrically conductive belt-shaped body may be copper or aluminium, and specifically may be chosen according to actual needs. The wireless sensor 7 may comprise a housing and a wireless communication module located inside the housing; the wireless communication module may use an FPC flexible wireless communication antenna. Thus, the wireless sensor 7 has wireless communication functionality. Specifically, the wireless sensor 7 may be a wireless temperature sensor, a wireless pressure sensor or a wireless humidity sensor; the specific choice may be made according to actual needs, and no further description is given here. The method by which the wireless sensor 7 is arranged on the electrically conductive ring 6 may be any method in the prior art, and is not described further here.

The electrically conductive ring 6 of the present invention has at least 1 deformable structure 61, the deformable structure 61 being formed by bending the electrically conductive belt-shaped body; this is equivalent to the electrically conductive ring 6 being provided with a deformable structure 61 formed integrally with the remaining structure of the electrically conductive ring 6. As shown in Fig. 2, the deformable structure 61 extends toward the circle center O of the electrically conductive ring 6, i.e. the deformable structure 61 extends inward radially. It should be explained that in actual application, the electrically conductive ring 6 permits a certain amount of process error. Specifically, the deformable structure 61 is configured to extend into 1 gap 21, and thus will not affect other structures. As shown in Figs. 1 - 3, the deformable structure 61 is formed integrally with the rest of the electrically conductive ring 6. As another exemplary illustration, the deformable structure 61 extends in the axial direction of the electrically conductive ring 6, and thus can serve a deformation function, for example when the electrically conductive belt-shaped body is thicker. It should be noted that the deformable structure 61 must not obstruct other structures.

When the tulip contact is in contact with the static contact 5, the deformable structure 61 can experience deformation; when the tulip contact is separated from the static contact 5, the deformable structure 61 can return to its original position. The tulip contact contacts the static contact 5, i.e. the tulip contact is in an operational state, at which time the radial expansion of the tulip contact will induce radial expansion of the electrically conductive ring 6. Due to the presence of the deformable structure 61, there is a certain allowance enabling radial expansion. When the static contact 5 leaves the tulip contact, due to the action of the elastic assembly of the tulip contact, the contact fingers 2 of the tulip contact return to their original positions, i.e. the tulip contact contracts radially. Correspondingly, the deformable structure 61 contracts at the same time. Specifically, the deformable structure 61 experiencing deformation means that one end, remote from the axis, of the deformable structure 61 expands toward two sides.

Optionally, silicone rubber pads 8 are provided on the electrically conductive ring 6; these can avoid mechanical friction between the electrically conductive ring 6 and the tulip contact. 2 silicone rubber pads 8 are shown in Fig. 1; in actual application, the number of the silicone rubber pads 8 may be chosen according to actual needs.

In the present invention, due to the presence of the deformable structure 61, the electrically conductive ring 6 is able to adapt to the radial expansion and contraction of the tulip contact, and it is thus possible to ensure the accuracy of measurement of the tulip contact by the wireless sensor 7.

The case where the deformable structure 61 faces toward the circle of the electrically conductive ring 6 is taken as an example below for illustration.

As an exemplary illustration, the deformable structure 61 is U-shaped; such a shape is easy to form by processing.

As another exemplary illustration, the number of deformable structures 61 is 2, and the 2 deformable structures 61 can respectively extend into the gaps 21 at two sides of 1 contact finger 2. That is, the deformable structures 61 are located in two adjacent gaps 21, thus facilitating deformation of the deformable structures. When 2 deformable structures 61 are used, it is possible to adapt to radial expansion of the tulip contact to a greater degree, and a minimal amount of material can be used, so as to reduce costs.

As another exemplary illustration, the number of deformable structures 61 is 2, and the 2 deformable structures 61 can respectively extend into gaps 21 at one side of 2 contact fingers 2 having the axis as an axis of symmetry. Having the two deformable structures 61 symmetric with respect to the axis can reduce displacement of other parts of the electrically conductive ring 6 to the maximum extent possible, thus ensuring stability of the electrically conductive ring 6. Furthermore, when 2 deformable structures 61 are used, it is possible to adapt to radial expansion of the tulip contact to a greater degree, and a minimal amount of material can be used, so as to reduce costs.

As another exemplary illustration, 1 gap 21 is used to accommodate 1 deformable structure 61. That is, within a single gap 21, there is no more than one deformable structure 61, such that the deformable structure 61 has sufficient room to deform.

As another exemplary illustration, the deformable structure 61 gradually decreases in width in a direction toward the axis. Such a structure facilitates insertion of the deformable structure 61 into the gap 21. Since the gap 21 of the tulip contact gradually decreases in width in a direction toward the axis, as shown in Fig. 2, having the deformable structure 61 similarly designed to gradually decrease in width toward the circle center O can match the structure of the gap 21.

As another exemplary illustration, on the same circumference, the arc length of the deformable structure 61 is less than or equal to 1/3 of the arc length of the gap 21. Specifically, see Fig. 2. Thus, the deformable structure 61 has sufficient room to deform within the gap 21.

As another exemplary illustration, the length of the deformable structure 61 is 1/3 - 2/3 of the contact finger 2 in a radial direction. Thus, the deformable structure 61 is not only able to deform, but can also save materials, thus lowering costs.

The structure, length and width of the deformable structure 61 in the exemplary illustrations above may be respectively subjected to permutation and combination; for example, at the same time as the width of the deformable structure 61 is less than or equal to 1/3 of the width of the gap 21, it must also be ensured that the length of the deformable structure 61 is 1/3 - 2/3 of the contact finger 2 in a radial direction.

The present invention further provides a circuit breaker trolley, comprising a sensing device for a tulip contact according to any one of the examples above, and a tulip contact.

Optionally, the elastic assembly comprises multiple ring springs, and the electrically conductive ring 6 is located between 2 ring springs. It is thus possible to prevent the electrically conductive ring 6 from falling off the tulip contact when the electrically conductive ring deforms.

The present invention further provides a switch cabinet, comprising a sensing device for a tulip contact according to any one of the examples above, and a tulip contact.

The above are merely preferred embodiments of the present invention, which are not intended to limit it.

## Claims

1. A sensing device for a tulip contact, the tulip contact comprising a support assembly (1), multiple contact fingers (2) and an elastic assembly, the support assembly (1) being used to support the multiple contact fingers (2), the multiple contact fingers (2) being arranged circumferentially and distributed around an axis, the elastic assembly being fitted round an outer periphery of the multiple contact fingers (2), a gap (21) being present between two adjacent contact fingers (2), and the tulip contact being configured to contact a static contact (5); the sensing device comprising:
an electrically conductive ring (6), formed by fastening an electrically conductive belt-shaped body, the electrically conductive ring (6) being configured to be fitted round an outer periphery of the tulip contact;
a wireless sensor (7), arranged on the electrically conductive ring (6);
**characterized in that** the electrically conductive ring (6) has at least one deformable structure (61), the deformable structure (61) being formed by bending the electrically conductive belt-shaped body.

2. The sensing device as claimed in claim 1, **characterized in that** the deformable structure (61) extends toward a circle center (O) of the electrically conductive ring (6); or
the deformable structure (6) extends in an axial direction of the electrically conductive ring (6).

3. The sensing device as claimed in claim 1, **characterized in that** the deformable structure (61) is configured to extend into one said gap (21).

4. The sensing device as claimed in claim 1, **characterized in that** the deformable structure (61) is U-shaped.

5. The sensing device as claimed in claim 1, **characterized in that** the number of the deformable structures (61) is 2, the 2 deformable structures (61) being able to respectively extend into gaps (21) at two sides of 1 contact finger (2); or
the number of the deformable structures (61) is two, the two deformable structures (61) being able to respectively extend into gaps (21) at one side of two contact fingers (2) having the axis as an axis of symmetry.

6. The sensing device as claimed in claim 1, **characterized in that** 1 said gap (21) is used to accommodate one said deformable structure (61).

7. The sensing device as claimed in claim 1, **characterized in that** the deformable structure (61) gradually decreases in width in a direction toward the axis.

8. The sensing device as claimed in claim 1, **characterized in that** on the same circumference, an arc length of the deformable structure (61) is less than or equal to 1/3 of an arc length of the gap (21).

9. The sensing device as claimed in claim 1, **characterized in that** a length of the deformable structure (61) is 1/3 - 2/3 of the contact finger (2) in a radial direction.

10. The sensing device as claimed in any one of claims 1 - 9, **characterized in that** the deformable structure (61) is able to experience deformation when the tulip contact is fully in contact with the static contact (5), and the deformable structure (61) is able to return to its original position when the tulip contact is separated from the static contact (5).

11. A circuit breaker trolley, **characterized by** comprising the sensing device for a tulip contact as claimed in any one of claims 1-10, and the tulip contact.

12. The circuit breaker trolley as claimed in claim 11, **characterized in that** the elastic assembly comprises multiple ring springs, and the electrically conductive ring (6) is located between two ring springs.

13. A switch cabinet, comprising a tulip contact and the sensing device for a tulip contact as claimed in any one of claims 1-10.

## Patentansprüche

1. Abtastvorrichtung für einen Tulpenkontakt, wobei der Tulpenkontakt eine Trägeranordnung (1), mehrere Kontaktfinger (2) und eine elastische Anordnung umfasst, wobei die Trägeranordnung (1) verwendet wird, um die mehreren Kontaktfinger (2) zu tragen, wobei die mehreren Kontaktfinger (2) umlaufend angeordnet und um eine Achse verteilt sind, wobei die elastische Anordnung um einen Außenumfang der mehreren Kontaktfinger (2) angebracht ist, wobei ein Spalt (21) zwischen zwei benachbarten Kontaktfingern (2) vorhanden ist, und wobei der Tulpenkontakt dazu ausgelegt ist, einen statischen Kontakt (5) zu kontaktieren; wobei die Abtastvorrichtung Folgendes umfasst:
einen elektrisch leitfähigen Ring (6), der durch Befestigen eines elektrisch leitfähigen bandförmigen Körpers gebildet ist, wobei der elektrisch leitfähige Ring (6) dazu ausgelegt ist, um einen Außenumfang des Tulpenkontakts angebracht zu sein;
einen drahtlosen Sensor (7), der auf dem elektrisch leitfähigen Ring (6) angeordnet ist;
**dadurch gekennzeichnet, dass** der elektrisch leitfähige Ring (6) mindestens eine verformbare Struktur (61) aufweist, wobei die verformbare Struktur (61) durch Biegen des elektrisch leitfähigen bandförmigen Körpers gebildet ist.

2. Abtastvorrichtung nach Anspruch 1, **dadurch gekennzeichnet, dass** sich die verformbare Struktur (61) zu einem Kreismittelpunkt (O) des elektrisch leitfähigen Rings (6) hin erstreckt; oder
sich die verformbare Struktur (6) in einer axialen Richtung des elektrisch leitfähigen Rings (6) erstreckt.

3. Abtastvorrichtung nach Anspruch 1, **dadurch gekennzeichnet, dass** die verformbare Struktur (61) dazu ausgelegt ist, sich in einen Spalt (21) zu erstrecken.

4. Abtastvorrichtung nach Anspruch 1, **dadurch gekennzeichnet, dass** die verformbare Struktur (61) U-förmig ist.

5. Abtastvorrichtung nach Anspruch 1, **dadurch gekennzeichnet, dass** die Anzahl der verformbaren Strukturen (61) 2 beträgt, wobei sich die 2 verformbaren Strukturen (61) jeweils in Spalte (21) auf zwei Seiten von 1 Kontaktfinger (2) erstrecken können; oder
die Anzahl der verformbaren Strukturen (61) zwei beträgt, wobei sich die zwei verformbaren Strukturen (61) jeweils in Spalte (21) auf einer Seite von zwei Kontaktfingern (2) erstrecken können, die die Achse als eine Symmetrieachse aufweisen.

6. Abtastvorrichtung nach Anspruch 1, **dadurch gekennzeichnet, dass** 1 Spalt (21) zur Aufnahme einer verformbaren Struktur (61) verwendet wird.

7. Abtastvorrichtung nach Anspruch 1, **dadurch gekennzeichnet, dass** die verformbare Struktur (61) in einer Richtung zur Achse hin allmählich in der Breite abnimmt.

8. Abtastvorrichtung nach Anspruch 1, **dadurch gekennzeichnet, dass** am gleichen Umfang eine Bogenlänge der verformbaren Struktur (61) kleiner als oder gleich 1/3 einer Bogenlänge des Spalts (21) ist.

9. Abtastvorrichtung nach Anspruch 1, **dadurch gekennzeichnet, dass** eine Länge der verformbaren Struktur (61) 1/3 - 2/3 des Kontaktfingers (2) in einer radialen Richtung beträgt.

10. Abtastvorrichtung nach einem der Ansprüche 1 bis 9, **dadurch gekennzeichnet, dass** die verformbare Struktur (61) eine Verformung erfahren kann, wenn der Tulpenkontakt vollständig mit dem statischen Kontakt (5) in Kontakt steht, und die verformbare Struktur (61) in ihre ursprüngliche Position zurückkehren kann, wenn der Tulpenkontakt von dem statischen Kontakt (5) getrennt ist.

11. Leistungsschalterwagen, **dadurch gekennzeichnet, dass** er die Abtastvorrichtung für einen Tulpenkontakt nach einem der Ansprüche 1-10 und den Tulpenkontakt umfasst.

12. Leistungsschalterwagen nach Anspruch 11, **dadurch gekennzeichnet, dass** die elastische Anordnung mehrere Ringfedern umfasst und der elektrisch leitfähige Ring (6) zwischen zwei Ringfedern angeordnet ist.

13. Schaltschrank, umfassend einen Tulpenkontakt und die Abtastvorrichtung für einen Tulpenkontakt nach einem der Ansprüche 1-10.

## Revendications

1. Dispositif de détection pour un contact tulipe, le contact tulipe comprenant un ensemble de support (1), de multiples doigts de contact (2) et un ensemble élastique, l'ensemble de support (1) étant utilisé pour supporter les multiples doigts de contact (2), les multiples doigts de contact (2) étant agencés circonférentiellement et distribués autour d'un axe, l'ensemble élastique étant ajusté à l'entour d'une périphérie extérieure des multiples doigts de contact (2), un espace (21) étant présent entre deux doigts de contact adjacents (2), et le contact tulipe étant configuré pour entrer en contact avec un contact statique (5) ; le dispositif de détection comprenant :
une bague électroconductrice (6), formée en fixant un corps en forme de bande électroconductrice, la bague électroconductrice (6) étant configurée pour être ajustée à l'entour d'une périphérie extérieure du contact tulipe ;
un capteur sans fil (7), agencé sur la bague électroconductrice (6) ;
**caractérisé en ce que** la bague électroconductrice (6) a au moins une structure déformable (61), la structure déformable (61) étant formée en cintrant le corps en forme de bande électroconductrice.

2. Dispositif de détection tel que revendiqué dans la revendication 1, **caractérisé en ce que** la structure déformable (61) s'étend vers un centre de cercle (O) de la bague électroconductrice (6) ; ou
la structure déformable (6) s'étend dans une direction axiale de la bague électroconductrice (6).

3. Dispositif de détection tel que revendiqué dans la revendication 1, **caractérisé en ce que** la structure déformable (61) est configurée pour s'étendre dans un dit espace (21).

4. Dispositif de détection tel que revendiqué dans la revendication 1, **caractérisé en ce que** la structure déformable (61) est en forme de U.

5. Dispositif de détection tel que revendiqué dans la revendication 1, **caractérisé en ce que** le nombre des structures déformables (61) est de 2, les 2 structures déformables (61) étant capables de s'étendre respectivement dans des espaces (21) sur deux côtés de 1 doigt de contact (2) ; ou
le nombre des structures déformables (61) est de deux, les deux structures déformables (61) étant capables de s'étendre respectivement dans des espaces (21) sur un côté de deux doigts de contact (2) ayant l'axe en tant qu'axe de symétrie.

6. Dispositif de détection tel que revendiqué dans la revendication 1, **caractérisé en ce que** 1 dit espace (21) est utilisé pour loger une dite structure déformable (61).

7. Dispositif de détection tel que revendiqué dans la revendication 1, **caractérisé en ce que** la structure déformable (61) diminue progressivement en largeur dans une direction vers l'axe.

8. Dispositif de détection tel que revendiqué dans la revendication 1, **caractérisé en ce que**, sur la même circonférence, une longueur d'arc de la structure déformable (61) est inférieure ou égale à 1/3 d'une longueur d'arc de l'espace (21).

9. Dispositif de détection tel que revendiqué dans la revendication 1, **caractérisé en ce qu'**une longueur de la structure déformable (61) est de 1/3 à 2/3 du doigt de contact (2) dans une direction radiale.

10. Dispositif de détection tel que revendiqué dans l'une quelconque des revendications 1 à 9, **caractérisé en ce que** la structure déformable (61) est capable de subir une déformation lorsque le contact tulipe est complètement en contact avec le contact statique (5), et la structure déformable (61) est capable de retourner à sa position d'origine lorsque le contact tulipe est séparé du contact statique (5).

11. Trolley disjoncteur, **caractérisé en ce qu'**il comprend le dispositif de détection pour un contact tulipe tel que revendiqué dans l'une quelconque des revendications 1 à 10, et le contact tulipe.

12. Trolley disjoncteur tel que revendiqué dans la revendication 11, **caractérisé en ce que** l'ensemble élastique comprend de multiples ressorts à bague, et la bague électroconductrice (6) est située entre deux ressorts à bague.

13. Armoire commutateur, comprenant un contact tulipe et le dispositif de détection pour un contact tulipe tel que revendiqué dans l'une quelconque des revendications 1 à 10.
